## Europäisches Patentamt
## European Patent Office
## Office européen des brevets

(19)

(11) Veröffentlichungsnummer: **0 124 880**
A2

(12) **EUROPÄISCHE PATENTANMELDUNG**

(21) Anmeldenummer: 84104981.0

(22) Anmeldetag: 03.05.84

(51) Int. Cl.³: **B 01 D 21/00**
B 01 D 23/10, B 01 D 23/24

(30) Priorität: 05.05.83 DE 3316480

(43) Veröffentlichungstag der Anmeldung:
14.11.84 Patentblatt 84/46

(84) Benannte Vertragsstaaten:
AT BE CH DE FR GB IT LI NL SE

(71) Anmelder: Linde Aktiengesellschaft
Abraham-Lincoln-Strasse 21
D-6200 Wiesbaden(DE)

(72) Erfinder: Reimann, Hans, Dr. rer. nat.
Rudolf-Wilke-Weg 21
D-8000 München 71(DE)

(74) Vertreter: Schaefer, Gerhard, Dr.
Linde Aktiengesellschaft Zentrale Patentabteilung
D-8023 Höllriegelskreuth(DE)

(54) **Verfahren und Vorrichtung zur Reinigung von Flüssigkeiten.**

(57) Bei einem Verfahren zur Reinigung von Flüssigkeiten werden in einem Becken 1 in der Flüssigkeit suspendierte Feststoffe in einem Absetzvorgang von der Flüssigkeit getrennt. Um eine möglichst weitgehende Feststoffabtrennung zu erreichen, ist vorgesehen, die nach dem Absetzvorgang in der Flüssigkeit noch enthaltenen, nicht sedimentierten Feststoffe an der beim Absetzvorgang sich ausbildenden Flüssigkeitsoberfläche in einer Schicht aus offenporigen Elementen 6 zurückzuhalten. Die mit Feststoffen beladenen Elemente 6 werden in einer Regeneriereinrichtung 11 regeneriert und für einen neuen Beladungsvorgang wiederverwendet.

EP 0 124 880 A2

## Verfahren und Vorrichtung zur
## Reinigung von Flüssigkeiten

Die Erfindung betrifft ein Verfahren zur Reinigung von Flüssigkeiten, bei dem in der Flüssigkeit suspendierte Feststoffe in einem Absetzvorgang von der Flüssigkeit getrennt werden, sowie eine Vorrichtung zur Durchführung des Verfahrens.

Auf dem Gebiet der Flüssigkeits- und Abwasserbehandlung stellt die Sedimentation seit langem eines der Hauptverfahren zum Abscheiden der in einer Flüssigkeit suspendierten Feststoffe unter Einwirkung der Schwerkraft dar. Beispielsweise werden auf dem Gebiet der Abwasserreinigung die bei einem chemischen Reinigungsvorgang ausgeflockten Substanzen, die bei einem biologischen Reinigungsvorgang durch Mikroorganismen in feste Substanz umgewandelten gelösten und kolloidalen Stoffe und die von vornherein im Abwasser enthaltenen Feststoffe in der Regel in Absetzbecken mit Schlammabzugsleitungen am Beckenboden und Klarwasserüberläufen am oberen Beckenrand vom Abwasser abgeschieden. Auf dem Gebiet der Schlammbehandlung ist es beispielsweise bekannt, den anfallenden Schlamm einer Schlammeindickung zuzuführen und dabei die Feststoffe im Schlamm durch Einwirkung eines natürlichen Schwerefeldes abzusetzen. Bei allen vorstehend genannten Anwendungsbeispielen wird jedoch auch bei optimal gestalteten und betriebenen Absetzbecken ein gewisser Anteil, insbesondere an feineren Feststoffen nicht sedimentiert und fließt mit der behandelten Flüssigkeit über die Überläufe der Absetzbecken ab. Vor allem bei Absetzvorgängen, die zur Nachklärung von Flüssigkeiten eingesetzt werden, sind jedoch im Überlauf noch enthaltene Feststoffe unerwünscht, da sie dann den erzielbaren Reinigungsgrad beeinträchtigen. Aus diesem Grund ist es auch bekannt, den Absetzbecken Filteranlagen nachzuschalten, in denen dann die im Überlauf der Absetzbecken noch enthaltenen Feststoffe auf den Filtermaterialien abgeschieden werden können. Für die Nachschaltung solcher Filter ist jedoch auch bei einer dann möglichen Verkleinerung der Absetzbecken ein gewisser Platzbedarf notwendig, der nicht immer zur Verfügung gestellt werden kann. Außerdem werden dadurch sowohl die Investitions- als auch die Betriebskosten einer entsprechenden Reinigungsanlage wesentlich erhöht.

Der Erfindung liegt deshalb die Aufgabe zugrunde, ein Verfahren der eingangs genannten Art sowie eine Vorrichtung zur Durchführung des Verfahrens so auszugestalten, daß bei einem Absetzvorgang auf einfache und wirtschaftliche Weise eine möglichst weitgehende Feststoffabtrennung erreicht werden kann.

Diese Aufgabe wird erfindungsgemäß dadurch gelöst, daß die nach dem Absetzvorgang in der Flüssigkeit noch enthaltenen, nicht sedimentierten Feststoffe an der beim Absetzvorgang sich ausbildenden Flüssigkeitsoberfläche in einer Schicht aus offenporigen Elementen zurückgehalten werden und daß die mit Feststoffen beladenen Elemente gegebenenfalls regeneriert und für einen neuen Beladungsvorgang wieder verwendet werden.

-.-

Demnach erfolgt die Beseitigung von bei einem Absetzvorgang nicht abgeschiedenen Feststoffen in einer Filterzone aus offenporigen Elementen, die direkt in einem der Sedimentation dienenden Becken ausgebildet wird, wobei die Feststoffe teilweise auf dem Element und in den Poren der Elemente abgelagert, teilweise aber auch in den zwischen den Elementen vorhandenen Zwischenräumen zurückgehalten werden. Ist dann die Filterzone mit Feststoffen beladen, können die Elemente innerhalb oder außerhalb der Filterzone für eine Wiederverwendung regeneriert und die bei der Regeneration der Elemente anfallenden Feststoffe einer Schlammbehandlung zugeführt werden.

Durch die Ausbildung der Filterzone im Absetzbecken kann auf die Nachschaltung eines gesonderten Filters verzichtet werden, so daß zur Erzielung einer optimalen Feststoffabtrennung kein zusätzlicher Platzbedarf notwendig ist. Statt dessen besteht die Möglichkeit, das Volumen der Absetzbecken im Vergleich zu bisher zu verkleinern, da beim Absetzvorgang infolge eines größeren volumenbezogenen Durchflusses nicht abgeschiedene Feststoffe in der Filterzone zurückgehalten werden.

Ist die Filterzone beispielsweise bereits in einem Vorklärbecken ausgebildet, kann auch das Volumen eines nachgeschalteten Belebungsbecken mit Sicherheit nicht mehr mit im Abwasser von vornherein vorhandenen Schwebstoffen belastet wird.

Als makroporöse Elemente werden vorteilhafterweise einzelne Schaumstoffteilchen mit einer Größe von 0,5 bis 50 mm und/oder Schaumstofformteile, die speziell auf die Form eines Beckens oder dessen Auslaufbereich zugeschnitten sind, verwendet.

Von Vorteil ist es dabei, wenn die Strömungsgeschwindigkeit der Flüssigkeit während des Absetzvorganges und/oder das spezifische Gewicht der Elemente so eingestellt wird, daß die Schicht aus Elementen selbsttätig an und/oder unterhalb der Flüssigkeitsoberfläche ausgebildet wird. Damit kann auf Einbauten in einem Absetzbecken, die die Elemente an und/oder unterhalb der Flüssigkeitsoberfläche halten, verzichtet werden. Allenfalls können einzelne, abgetauchte Trennwände zweckmäßig sein, wenn die Elemente nicht an der gesamten Flüssigkeitsoberfläche sondern nur vorzugsweise in solchen Bereichen an der Flüssigkeitsoberfläche, aus denen das gereinigte Wasser abgezogen wird, gehalten werden sollen. Damit die Elemente nicht mit der gereinigten Flüssigkeit abtreiben, muß jedoch auf alle Fälle am Abfluß der Flüssigkeit eine geeignete Rückhalteeinrichtung vorhanden sein.

Als zum Aufbau der Filterzone geeignete Schaumstoffelemente kommen insbesondere solche aus Polyurethan-Weichschaum, Schaumgummi, Harnstoff-Formaldehydharzen, Polyäthylen, Polypropylen, Silikonpolymer oder Mischungen aus zwei oder mehreren der genannten Materialien in Frage, wobei die offenen Makroporen solcher Schaumstoffelemente sich im Hinblick auf das Rückhalten der Feststoffe günstig auswirken. Selbstverständlich können dabei auch entsprechende Rest- und Abfallstücke, die bei der kunststoffverarbeitenden Industrie anfallen, zum Einsatz kommen.

Damit die Schicht aus Elementen ohne die Verwendung von Einbauten an oder knapp unterhalb der Flüssigkeitsoberfläche selbsttätig ausgebildet wird, sollten die verwendeten Elemente im trockenen Zustand ein spezifisches Gewicht im Bereich von 30 bis 80 kg/m³ aufweisen, wobei von einer nach oben gerichteten Flüssigkeitsströmung mit einer Strömungsgeschwindigkeit im Bereich von 1 bis 10 m/h ausgegangen wird. Eine solche Strömungsgeschwindigkeit gewährt nicht nur einen guten Absetzvorgang, sondern vermeidet auch die Ausbildung von Turbulenzen in der Filterzone, die ansonsten, insbesondere bei Verwendung einzelner Schaumstoffteilchen zur Bildung der Filterzone, ein Aufreissen der Filterzone und die Bildung großer Zwischenräume zwischen den einzelnen Schaumstoffteilchen bewirken könnte. Bei der Auswahl der Strömungsgeschwindigkeit und des spezifischen Gewichts muß auf alle Fälle berücksichtigt werden, daß die Elemente im Laufe der Zeit durch das Beladen mit Feststoffen schwerer werden, so daß zur Vermeidung des Absinkens der Elemente unter Betriebsbedingungen deren spezifisches Gewicht auch in Abhängigkeit ihres Volumens und ihrer möglichen Beladung ausgewählt werden muß.

Die Stärke der durch die Elemente gebildeten Schicht sollte für die Erzielung einer guten Filterwirkung in etwa 50 mm betragen. Eine größere Schichtdicke ist dann empfehlenswert, wenn die Restverschmutzung der beim Absetzvorgang geklärten Flüssigkeit oder die Abmessungen der auszufiltrierenden Feststoffe verhältnismäßig groß ist. In diesem Fall kann es auch günstig sein, die Filterzone aus unterschiedlich großen Elementen aufzubauen, wobei die großen und kleinen Elemente entweder unregelmäßig nebeneinander oder aber auch in einzelnen Schichten übereinander, beispielsweise durch die Verwendung von Elementen mit unterschiedlichem spezifischem Gewicht, angeordnet sein können.

Falls es für eine störungsfreie Betriebsweise der Filterzone zu schwierig ist, die Aufströmgeschwindigkeit der Flüssigkeit und das spezifische Gewicht der Elemente so aufeinander abzustimmen, daß die Schicht aus Elementen selbsttätig an oder unterhalb der Flüssigkeitsoberfläche ausgebildet wird, ist es gemäß einer weiteren Ausführungsform des Verfahrens auch möglich, die Schicht aus Elementen unter Verwendung mechanischer Rückhalteeinrichtungen an und/oder unterhalb der Flüssigkeitsoberfläche auszubilden. Dies kann beispielsweise dadurch erfolgen, daß in einem Abstand von der Flüssigkeitsoberfläche, der der vorgesehenen Schichtdicke der Elemente entspricht, ein Siebboden oder ein Netz angeordnet wird, wobei deren Durchtrittsöffnungen so zu wählen sind, daß einerseits die kleinsten Elemente nicht nach unten absinken können, daß aber andererseits auch eine Verstopfung der Durchtrittsöffnungen durch in der aufsteigenden Flüssigkeit enthaltene Feststoffe vermieden wird. Falls das spezifische Gewicht der Elemente von der Größe ist, daß diese auch bei einer Beladung mit Feststoffen auf der Flüssigkeitsoberfläche schwimmen, kann es auch zweckmäßig sein, die Rückhalteeinrichtungen nicht unterhalb, sondern oberhalb der Elemente in der Weise anzuordnen, daß sich die Schicht aus Elementen mit Sicherheit in einem abgetauchten Zustand unmittelbar unter der Flüssigkeitsoberfläche ausbildet. Solche Rückhalteeinrichtungen können dann gleichzeitig auch dazu dienen, einen Abtrieb der Elemente mit der gereinigten Flüssigkeit zu verhindern.

Um eine möglichst weitgehende Feststoffabtrennung immer gewährleisten zu können, sollten die verwendeten Elemente von Zeit zu Zeit erneuert oder einem Regenerationsvorgang unterworfen werden. Mit Vorteil kann die Regeneration der Elemente periodisch oder kontinuierlich unter Verwendung eines Auspreß- und/oder Spülvorganges durchgeführt werden. Das Auspressen der Elemente, das allerdings nur bei flexiblen Elementen in Frage kommt, kann dabei beispielsweise unter Verwendung von rotierenden Preßwalzen oder Siebbandpressen in einem eventuell mehrmals wiederholbaren Arbeitsgang erfolgen.

Für einen Spülvorgang, der zweckmäßigerweise außerhalb der Absetzzone vorgenommen wird, da ansonsten die abgesetzten Feststoffe wieder aufgewirbelt werden, kann ein Gas, die geklärte Flüssigkeit, Frischwasser oder eine Mischung aus den angegebenen Medien verwendet werden, wobei unter Umständen sich zusätzlich noch ein gleichzeitiges mechanisches Bewegen der Elemente empfehlen kann. Die bei der Regeneration freigesetzten Feststoffe werden gesammelt und gegebenenfalls einer Schlammbehandlung zugeführt, während die von Feststoffen befreiten Elemente wieder zur Ausbildung der Filterzone herangezogen werden.

Eine Vorrichtung zur Durchführung des Verfahrens umfaßt ein Becken zur Trennung von Flüssigkeit und suspendierten Feststoffen durch Sedimentation mit einem Zulauf für zu behandelnde Flüssigkeit, einem Ablauf für behandelte Flüssigkeit und einer Schlammableitung für sedimentierte Feststoffe. Erfindungsgemäß ist eine solche Vorrichtung dadurch gekennzeichnet, daß zumindest im Bereich des Ablaufs für behandelte Flüssigkeit an und/oder unterhalb der Flüssigkeitsoberfläche eine Schicht aus offenporigen Elementen ausgebildet ist und gegebenenfalls eine Regeneriereinrichtung für beladene Elemente vorhanden ist.

Falls die Elemente nicht bereits aufgrund der für den Absetzvorgang geeigneten Geschwindigkeit der nach oben gerichteten Flüssigkeitsströmung und aufgrund ihres spezifischen Gewichtes selbsttätig an und unter der Flüssigkeitsoberfläche gehalten werden, ist es zweckmäßig, wenn das Becken zur Ausbildung der Schicht aus Elementen Einbauten aufweist. Diese können beispielsweise aus gelochten Böden und Wänden, Sieben oder Netzen bestehen, die je nach spezifischem Gewicht der Elemente oberhalb oder unterhalb der

-.-

Elemente in der Weise angeordnet sind, daß die obere Begrenzung der Schicht aus Elementen in etwa mit der Flüssigkeitsoberfläche abschließt.

Die Regeneriereinrichtung ist vorteilhafter Weise als Preßeinrichtung und/oder als Spüleinrichtung ausgebildetund entweder innerhalb oder außerhalb des Beckens angeordnet. Dabei kann die Spüleinrichtung aus einem geschlossenen Behälter bestehen, der mit einer Zu- und Ableitung für die Elemente der Filterzone, mit einer Zu- und Ableitung für ein Spülmedium, wie beispielsweise Luft oder gereinigte Flüssigkeit, mit einer Abzugsleitung für abgetrennte Feststoffe und gegebenenfalls mit einer Rühreinrichtung versehen ist. Eine Preßeinrichtung, die zur Verringerung des Platzbedarfs vorzugsweise in dem Becken angeordnet werden kann, kann beispielsweise aus über der Schicht aus Elementen angeordneten Preßwalzen, Siebbandpressen oder ähnlichen Vorrichtungen bestehen, wobei der Preßeinrichtung in jedem Fall eine Auffangeinrichtung mit Abzugsleitung für abgetrennte Feststoffe zugeordnet sein muß. Zur Beladung der Preßeinrichtung mit den zu regenerierenden Elementen kann diese entweder in die Filterzone absenkbar oder durch diese hindurchbewegbar ausgebildet sein oder die Elemente können über eine Mammutpumpe oder ein Förderband zur Preßeinrichtung gefördert werden.

Zur Erzielung einer ausreichenden Filterwirkung werden mit Vorteil Elemente aus einzelnen, eine Größe von 0,5 bis 50 mm aufweisenden Schaumstoffteilchen und mit Makroporen mit einem Durchmesser von 0,1 bis 3 mm verwendet. Bei dieser Größe der Schaumstoffteilchen und der Makroporen wird ein Ablagern auch von Feinststoffen sicher erreicht.

-.-

Statt dessen können aber ebensogut die Elemente als Schaumstoffformteile ausgebildet sein, die speziell auf die Form des Absetzbeckens oder dessen Auslaufbereich zugeschnitten sind und die dann bereits die gewünschte Schichtdicke der Filterzone und Makroporen von 0,1 bis 3 mm aufweisen.

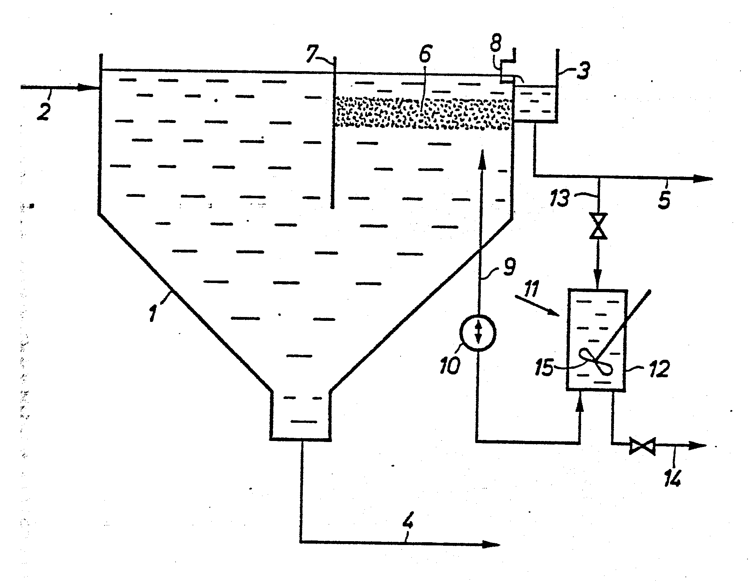

Ein Ausführungsbeispiel eines zur Durchführung von Sedimentationsvorgängen geeigneten Beckens mit integrierter Filterzone ist in der beigefügten Zeichnung schematisch dargestellt. Dabei ist das Becken nur beispielhaft als Nachklärbecken beschrieben. Selbstverständlich könnten aber auch andere Becken, in denen eine Sedimentation von Feststoffen stattfindet, wie z.B. Vorklärbecken, Schönungsteiche, Algenbecken, Schlammabsetzteiche oder Schlammeindicker, mit einer erfindungsgemäßen, integrierten Filterzone ausgerüstet werden.

In der Figur ist mit 1 ein Nachklärbecken einer biologischen Abwasserreinigungsanlage bezeichnet, das einen Zulauf 2 für zu behandelndes Abwasser-Belebtschlamm-Gemisch aus einem nicht dargestellten Belebungsbecken, am oberen Beckenrand zumindest teilweise eine Sammelrinne für geklärtes Abwasser und am Beckenboden eine Schlammableitung 4 für sedimentierte Feststoffe aufweist. An die Sammelrinne 3 ist ein Ablauf 5 für geklärte Flüssigkeit angeschlossen. In üblicher Weise ist dabei die Strömungsgeschwindigkeit des Wassers in bezug auf die Sinkgeschwindigkeit der abzuscheidenden Feststoffe durch eine geeignete Beckenkonstruktion und Beckengröße so eingestellt, daß sich die abzuscheidenden Feststoffe tatsächlich zum Beckenboden hin absetzen.

Da auf diese Weise die Dauer des Absetzvorganges insbesondere für feinere Feststoffe erhebliche Zeit beansprucht,

-.-

bzw. feinere Feststoffe auf diese Weise überhaupt nicht abgeschieden werden können, ist erfindungsgemäß etwas unterhalb der Flüssigkeitsoberfläche eine Schicht aus offenporigen Schaumstoffelementen 6 ausgebildet, die sich, wie im dargestellten Fall, entweder nur in dem Teilbereich des Beckens 1, der unmittelbar an die Sammelrinne 3 für geklärte Flüssigkeit anschließt, oder aber über die gesamte Fläche des Beckens 1 erstrecken kann. Damit die Schaumstoffelemente 6 in dem der Sammelrinne 3 benachbarten Bereich gehalten werden, ist eine Tauchwand 7 vorhanden, die so tief unter die Flüssigkeitsoberfläche abgetaucht ist, daß in dem die Schaumstoffelemente 6 enthaltenen Bereich eine Aufwärtsströmung des zumindest von groben Feststoffen durch Sedimentation schon befreiten Abwassers zu dem Überlauf in die Sammelrinne 3 entsteht.

Die Strömungsgeschwindigkeit der nach oben gerichteten Wasserströmung sowie das spezifische Gewicht der Schaumstoffelemente 6 ist so aufeinander abgestimmt, daß sich die Schicht aus Schaumstoffelementen 6 auch bei Beladung mit Feststoffen selbsttätig an und/oder unterhalb der Flüssigkeitsoberfläche zwischen Tauchwand 7 und Beckenwand zur Sammelrinne 3 ausbildet. Damit sichergestellt ist, daß die Schaumstoffelemente 6 nicht in die Sammelrinne 3 ausgetragen werden, ist die Überlauföffnung in der Beckenwand zur Sammelrinne 3 hin mit einer Rückhalteeinrichtung 8 versehen, die beispielsweise aus einem Sieb oder einem Netz bestehen kann.

Falls die Abstimmung von Strömungsgeschwindigkeit und spezifischem Gewicht der Schaumstoffelemente 6 für eine selbsttätige Ausbildung der Schicht aus Schaumstoffelementen 6 zu schwierig ist, besteht ebenso die Möglichkeit, entweder unterhalb oder bei aufschwimmenden Schaumstoffelementen 6 oberhalb der Schicht einen Siebboden oder ein Netz anzuordnen, deren Durchtrittsöffnungen kleiner als einzelne Schaumstoffelemente sind. Wenn der Siebboden oder das Netz oberhalb der Schicht aus Schaumstoffelementen angeordnet wird, kann dann selbstverständlich die Rückhalteeinrichtung 8 vor der Überlauföffnung zur Sammelrinne 3 entfallen.

Mit der Ausbildung der Schicht aus Schaumstoffelementen 6 kann nicht nur eine vollständig von Feststoffen befreite Flüssigkeit über den Ablauf 5 abgezogen werden, sondern es kann in der Regel auch ein kleineres Absetzbecken zum Einsatz kommen, da dann nicht mehr ein Absetzen von möglichst großen Feststoffmengen erreicht werden muß und die in dem zu klärenden Abwasser nach dem Absetzvorgang noch enthaltenen Feststoffe in der Schicht aus Schaumstoffelementen zurückgehalten werden. Um eine möglichst hohe Wirkung der Schicht aus Schaumstoffelementen gewährleisten zu können, sollte die Schichtdicke in etwa 50 mm betragen. Dabei können auch unterschiedlich große einzelne Schaumstoffteilchen in einer Größe von 0,5 bis 50 mm und mit Makroporen in einem Druchmesser von 0,1 bis 3 mm nebeneinander und übereinander angeordnet werden oder entsprechende Schaumstoffteile verwendet werden.

Zur Regeneration der Schaumstoffelemente 6 nach einer Beladung mit Feststoffen ist insbesondere für den Fall, daß als Schaumstoffelemente einzelne Schaumstoffteilchen verwendet werden, an das Absetzbecken 1 eine unterhalb der Schicht aus Schaumstoffelementen 6 mündende Leitung 9 mit Pumpe 10 angeschlossen, die zu einer Spüleinrichtung 11 führt. Diese besteht aus einem geschlossenen Behälter 12, der mit einer Zuleitung 13 für ein Spülmedium, wie Luft oder im dargestellten Fall geklärte Flüssigkeit, mit einer Abzugsleitung 14 für abgetrennte Feststoffe sowie gegebe-

-.-

nenfalls mit einer Rühreinrichtung 15 ausgestattet ist. Die Abzugsleitung 14 kann mit der Schlammableitung 4 des Absetzbeckens 1 in Verbindung stehen. Für einen Spülvorgang werden die Schaumstoffteilchen mit Hilfe der Pumpe 10 in den Behälter 12 gepumpt. Nach Abstellen der Pumpe 10 wird Spülflüssigkeit, gegebenenfalls bei Betrieb der Rühreinrichtung 15 entweder kontinuierlich oder periodisch über die Leitung 13 eingeleitet und über die Abzugsleitung 14 zusammen mit den ausgeschwemmten Feststoffen abgezogen. Nach Beendigung des Regenerationsvorganges werden die Zuleitung 13 und die Abzugsleitung 14 geschlossen und die Schaumstoffteilchen 6 über die Pumpe 10 in das Absetzbecken 1 zurückgepumpt.

Werden flexible Schaumstoffelemente verwendet, kann die Regeneration auch mit Hilfe einer Preßeinrichtung durchgeführt werden. Wie bereits angedeutet, kann diese aus Preßrollen, aus Bandpressen oder ähnlichen Einrichtungen bestehen, die entweder über der Schicht aus Schaumstoffelementen mit einer entsprechenden Fördereinrichtung angeordnet sind oder die in den Bereich des Absetzbeckens 1, in dem die Schicht aus Schaumstoffelementen ausgebildet ist, abtauchbar sind. Dabei hätte eine solche Preßeinrichtung gegenüber einer Spüleinrichtung den Vorteil, daß sie keinen gesonderten Platzbedarf aufweist. Außerdem können mit einer Preßeinrichtung ohne weiteres auch als Schaumstofformteile ausgebildete Schaumstoffelemente regeneriert werden.

Schließlich kann zur Regeneration auch noch eine kobinierte Preß- und Spüleinrichtung verwendet werden. Beispielsweise könnte in dem Behälter 12 der Spüleinrichtung 11 anstelle der Rühreinrichtung 15 ein mit Löchern versehener Preßstempel angeordnet sein, der zusätzlich zur Wirkung der Spülflüssigkeit periodisch ein Zusammenpressen der Schaumstoffelemente bewirkt.

Patentansprüche

1. Verfahren zur Reinigung von Flüssigkeiten, bei dem in der Flüssigkeit suspendierte Feststoffe in einem Absetzvorgang von der Flüssigkeit getrennt werden, dadurch gekennzeichnet, daß die nach dem Absetzvorgang in der Flüssigkeit noch enthaltenen, nicht sedimentierten Feststoffe an der beim Absetzvorgang sich ausbildenden Flüssigkeitsoberfläche in einer Schicht aus offenporigen Elementen zurückgehalten werden und daß die mit Feststoffen beladenen Elemente gegebenenfalls regeneriert und für einen neuen Beladungsvorgang wiederverwendet werden.

2. Verfahren nach Anspruch 1, dadurch gekennzeichnet, daß als makroporöse Elemente einzelne Schaumstoffteilchen mit einer Größe von 0,5 bis 50 mm und/oder Schaumstofformteile verwendet werden.

-.-

3. Verfahren nach Anspruch 1 oder 2, dadurch gekennzeichnet, daß die Strömungsgeschwindigkeit der Flüssigkeit während des Absetzvorgangs und/oder das spezifische Gewicht der Elemente so eingestellt wird, daß die Schicht aus Elementen selbsttätig an und/oder unterhalb der Flüssigkeitsoberfläche ausgebildet wird.

4. Verfahren nach Anspruch 1, dadurch gekennzeichnet, daß die Schicht aus Elementen unter Verwendung mechanischer Rückhalteeinrichtungen an und/oder unterhalb der Flüssigkeitsoberfläche ausgebildet wird.

5. Verfahren nach einem der Ansprüche 1 bis 4, dadurch gekennzeichnet, daß die Regeneration der Elemente periodisch oder kontinuierlich durch Auspressen und/oder Spülen durchgeführt wird.

6. Vorrichtung zur Durchführung des Verfahrens nach einem der Ansprüche 1 bis 5, mit einem Becken zur Trennung von Flüssigkeit und suspendierten Feststoffen durch Sedimentation mit einem Zulauf für zu behandelnde Flüssigkeit, mit einem Ablauf für behandelte Flüssigkeit und mit einer Schlammableitung für sedimentierte Feststoffe, dadurch gekennzeichnet, daß zumindest im Bereich des Ablaufs (5) für behandelte Flüssigkeit an und/oder unterhalb der Flüssigkeitsoberfläche eine Schicht aus offenporigen Elementen (6) ausgebildet ist und gegebenenfalls eine Regeneriereinrichtung (11) für beladene Elemente (6) vorhanden ist.

7. Vorrichtung nach Anspruch 6, dadurch gekennzeichnet, daß das Becken (1) zur Ausbildung der Schicht aus Elementen (6) Einbauten aufweist.

-.-

8. Vorrichtung nach Anspruch 6 oder 7, dadurch gekennzeichnet, daß die Regeneriereinrichtung (11) als Preßeinrichtung und/oder als Spüleinrichtung ausgebildet ist.

9. Vorrichtung nach einem der Ansprüche 6 bis 8, dadurch gekennzeichnet, daß die Elemente (6) Schaumstoffteilchen mit einer Größe von 0,5 bis 50 mm und Makroporen mit einem Durchmesser von 0,1 bis 3 mm aufweisen.

10. Vorrichtung nach einem der Ansprüche 6 bis 8, dadurch gekennzeichnet, daß die Elemente als Schaumstoffformteile mit Makroporen von 0,1 bis 3 mm ausgebildet sind.

-.-

0124880